# EUROPÄISCHE PATENTSCHRIFT

(11) **EP 3 300 994 B1**
(45) Veröffentlichungstag und Bekanntmachung des Hinweises auf die Patenterteilung: **14.04.2021**
(21) Anmeldenummer: 17185113.2
(22) Anmeldetag: 07.08.2017
(51) Int. Cl.: B62D 33/06

(54) **DÄMPFUNGSSYSTEM**
DAMPING SYSTEM
SYSTÈME D'AMORTISSEMENT

(30) Priorität: 29.09.2016 DE 102016118550
(43) Veröffentlichungstag der Anmeldung: 04.04.2018
(73) Patentinhaber: CLAAS Tractor S.A.S., 78141 Vélizy-Villacoublay Cedex (FR)
(72) Erfinder: Barentin, Magali, 78180 Montigny le Bretonneux (FR); Heilles, Yves, 94429 Le Plessis Trévise (FR); Alquier, Eric, 91120 Draveil (FR)
(74) Vertreter: CLAAS Gruppe

(56) Entgegenhaltungen:
- DE-A- 3 016 545
- US-A- 2 639 186

## Beschreibung

Die vorliegende Erfindung betrifft ein Dämpfungssystem gemäß dem Oberbegriff des Anspruches 1. Des Weiteren betrifft die vorliegende Erfindung ein landwirtschaftliches Fahrzeug gemäß dem Oberbegriff des Anspruches 8.

Ein Dämpfungssystem sowie ein landwirtschaftliches Fahrzeug der eingangs genannten Art sind aus der EP 0 426 510 A1 bekannt. Das Dämpfungssystem umfasst vier elastisch verformbare Elemente, die beispielsweise zwischen einer Kabine und einem Fahrzeugrahmen, auf dem die Kabine gelagert ist, angeordnet sind. Ein hinteres Paar dieser Elemente ist mit der hinteren Kabinenbasis durch eine hintere Querstrebe verbunden. Ein vorderes Paar dieser Elemente ist jeweils durch Halteelemente mit der vorderen Kabinenbasis verbunden, wobei die Halteelemente mittels Längsstreben, die sich in Längsrichtung des Dämpfungssystems erstrecken, zusätzlich an einem hinteren Querträger angelenkt sind, der an dem Fahrzeugrahmen befestigt ist. Nachteilig bei dem offenbarten Dämpfungssystem ist, dass eine Vielzahl von Elementen aufwändig miteinander und mit dem Fahrzeugrahmen sowie der Kabine verbunden werden müssen, um ihre jeweilige Funktion ausüben zu können. Zudem können Vibrationen von dem Fahrzeugrahmen auf die Kabine übertragen werden. Auch ein Anpassen des Dämpfungssystems an eine unterschiedliche ausgestaltete Kabine zum Beispiel verursacht aufgrund der Vielzahl an Elementen einen hohen konstruktiven und monetären Aufwand.

Ein Dämpfungssystem der eingangs genannten Art ist auch aus der DE 30 16 545 A1 bekannt.

Es ist daher die Aufgabe der vorliegenden Erfindung, ein Dämpfungssystem bereitzustellen, welches neben einer Erhöhung des Komforts und eine Vereinfachung der Montage ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein Dämpfungssystem für eine Lagerung einer Kabine, insbesondere eines landwirtschaftlichen Fahrzeuges, umfasst mindestens zwei Lagerstellen, wobei jede Lagerstelle jeweils ein erstes Dämpfungsmittel zur Dämpfung einer Vertikalbewegung aufweist. Gemäß der Erfindung weist jede Lagerstelle, insbesondere genau, ein unteres Verbindungselement und ein oberes Verbindungselement zur Verbindung mit einer Kabine auf, wobei das untere und das obere Verbindungselement einer Lagerstelle jeweils durch das erste Dämpfmittel relativ zueinander beweglich miteinander verbunden sind, und dass zumindest ein Verbindungselement einer Lagerstelle ein zweites Dämpfungsmittel zu Dämpfung von Vibrationen aufweist. Der Aufbau des Dämpfungssystems hat den Vorteil, dass durch die Anordnung eines zweiten Dämpfungsmittels an jeder Lagerstelle insbesondere eine Übertragung von Vibrationen von der Karosserie auf die Kabine reduziert und der Komfort für einen Bediener in der Kabine weiter verbessert werden kann. Zudem kann so eine Vormontage des zweiten Dämpfungsmittels ermöglicht werden, wodurch der Montageaufwand reduziert werden kann.

Gemäß der Erfindung weist das untere Verbindungselement bodenseitig eine Montagefläche auf, an welcher das zweite Dämpfungsmittel angeordnet ist. Die Anordnung des zweiten Dämpfungsmittels bodenseitig des unteren Verbindungselementes ermöglicht eine einfache geometrische Ausgestaltung des zweiten Dämpfungsmittel und eine zuverlässige Wirkungsweise, da das Verbindungselement auf das zweite Dämpfungsmittel im Wesentlichen eine Druckbelastung ausübt.

Weiterhin weist eine Lagerstelle eine Adapterplatte zur Verbindung mit einer Karosserie auf, wobei die Adapterplatte bodenseitig an dem unteren Verbindungselement durch Befestigungsmittel angeordnet ist, wobei das zweite Dämpfungselement zwischen dem unteren Verbindungselement und der Adapterplatte angeordnet ist. Die Adapterplatte und die Anordnung des unteren Verbindungselementes daran hat den Vorteil, dass ein kostengünstiges einheitliches unteres Verbindungselement beispielsweise für unterschiedliche Kabinen und/oder Fahrzeuge verwendet werden kann. Zudem kann durch eine Vormontage der Nach der Erfindung besteht das zweite Dämpfungsmittel aus mehreren Dämpfungselementen. Die hat den Vorteil, dass das zweite Dämpfungsmittel besser an den verfügbaren Bauraum und insbesondere die Vibrationen übertragenden Bereiche der Lagerung angepaßt werden kann. Vorzugsweise ist dabei jedem Befestigungsmittel jeweils ein Dämpfungselement zugeordnet. Hierdurch kann an jedem Befestigungsmittel zuverlässig eine Übertragung von Vibrationen durch die Dämpfungselemente vermieden werden.

Die Adapterplatte bodenseitig und/oder randseitig Befestigungsbereiche zur Verbindung mit einer Karosserie auf. Durch die an der Adapterplatte ausgebildeten Befestigungsbereiche kann die Adapterplatte ohne zusätzlichen Aufwand an unterschiedlich ausgebildeten Karosserien montiert werden, wobei durch die Verwendung eines einheitlichen unteren Verbindungselementes die Anzahl an zu verbauenden unterschiedlichen Teilen verringert und so der Montageaufwand und Kosten reduziert werden können.

In einer bevorzugten Ausgestaltung der Erfindung weist die Adapterplatte Befestigungsbereiche zur Befestigung an einer ersten und/oder zweiten Form der Karosserie auf. Hierdurch kann die Adapterplatte und damit die jeweilige Lagerstelle ohne zusätzlichen Aufwand an unterschiedlichen Formen einer Karosserie befestigt und so der Montageaufwand verringert werden. Vorzugsweise sind jeweils eine erste Adapterplatte und/oder eine zweite Adapterplatte vorgesehen, zu Verbindung mit einer in einer ersten oder zweiten Form ausgestalteten Karosserie. Dies hat den Vorteil, dass eine bessere Anpassung der jeweiligen Adapterplatte an den jeweils verfügbaren Bauraum ermöglicht wird, wobei ein kostengünstiges einheitliches unteres Verbindungselemente genutzt werden kann. Die Adapterplatte ist dabei vorzugsweise in Form eines Blechbauteils und/oder eines Gußbauteils ausgebildet. Die Ausbildung in Form eines Blechbauteils ermöglicht eine kostengünstige Fertigung einer Adapterplatte, insbesondere für unterschiedliche Formen von Karosserien. Durch eine Adapterplatte in Form eines Gußbauteils ist die Adapterplatte besonders gut an aufzunehmende Kräfte anpassbar. Durch eine mehrteilig ausgebildete Adapterplatte, beispielsweise mit Blechteilen und Gußteilen, wird eine kostengünstige und flexible Anpassung der Adapterplatte an die gegebenen Randbedingungen wie Kosten, verfügbarer Bauraum und aufzunehmende Kräfte ermöglicht.

Des Weiteren wird die eingangs gestellte Aufgabe durch ein landwirtschaftliches Fahrzeug, insbesondere Traktor, umfassend eine an einer Karosserie gelagerte Kabine gelöst, welches zur Lagerung der Kabine ein wie vorstehend beschriebenes und ausgebildetes Dämpfungssystem aufweist.

Nachfolgend wird die Erfindung unter Bezugnahme auf die anliegenden Zeichnungen näher erläutert.

Es zeigen:
- Fig. 1:: eine schematische perspektivische Ansicht einer Lagerung mit einer ersten Adapterplatte; und
- Fig. 2:: eine schematische perspektivische Ansicht der Lagerung mit einer zweiten Adapterplatte.

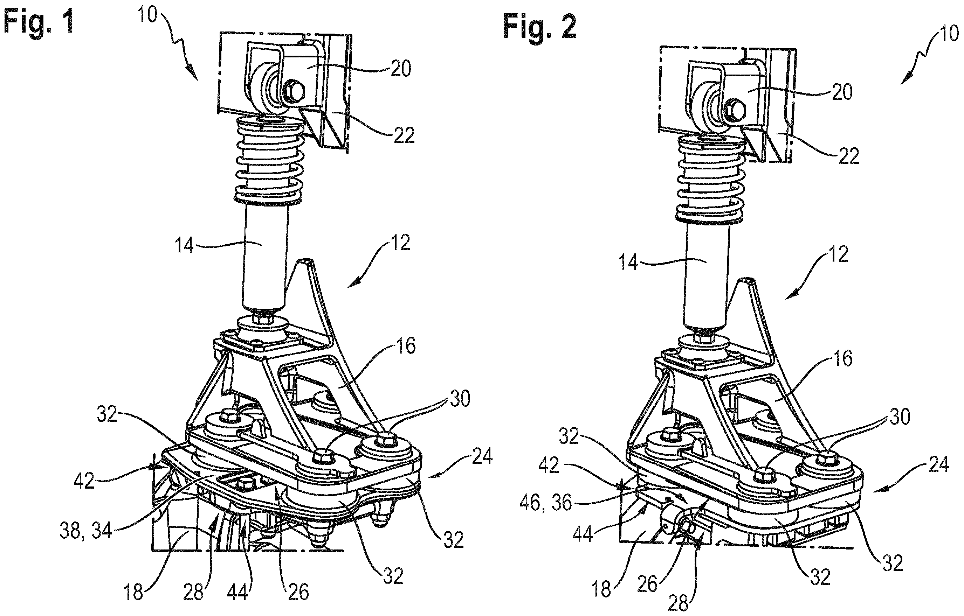

Die Darstellung in Fig. 1 zeigt eine perspektivische Ansicht eines Dämpfungssystems 10, insbesondere für ein landwirtschaftliches Fahrzeug, mit einer Lagerstell 12, welches ein erstes Dämpfungsmittel 14 zur Dämpfung von im Wesentlichen vertikalen Bewegungen aufweist. Das erste Dämpfungsmittel 14 ist dabei in Form eines FederDämpfer-Elementes ausgebildet. Jede Lagerstelle 12 des Dämpfungssystems 10 weist, insbesondere jeweils genau, ein unteres Verbindungselement 16 auf, welches gegenüber einer Karosserie 18 des Fahrzeuges abstützbar ist, und ein oberes Verbindungselement 20, welches mit einer Kabine 22 verbunden ist. Dabei sind das untere Verbindungselement 16 und das obere Verbindungselement 20 durch das mit diesen verbundenen erste Dämpfungsmittel 14 relativ zueinander beweglich miteinander verbunden. Ein Dämpfungssystem 10, insbesondere für ein landwirtschaftliches Fahrzeug, weist mindestens zwei Lagerstellen 12 auf, welche insbesondere heckseitig an einer Kabine 22 des Fahrzeuges angeordnet sein können. Denkbar ist auch eine Lagerung der Kabine 22 mit einem Dämpfungssystem 10, welches drei oder vier Lagerstellen aufweist, wodurch eine Dämpfung der Kabine 22 sowohl front- als auch heckseitig ermöglicht wird.

Gemäß der Erfindung weist zumindest ein Verbindungselement 16, 20 einer Lagerstelle 12 ein zweites Dämpfungsmittel 24 auf. Das zweite Dämpfungsmittel 24 kann dabei an dem unteren Verbindungselement 16 und/oder dem oberen Verbindungselement 20 angeordnet sein. Das zweite Dämpfungsmittel 24 kann ein oder mehrteilig ausgebildet sein und aus einem elastisch verformbaren Material, beispielsweise Gummi, bestehen. Durch das zweite Dämpfungsmittel 24 dient im Wesentlichen der Dämpfung von Schwingungen und/oder Vibrationen, welche von der Karosserie und/oder der Kabine auf das jeweilige Verbindungselement 16, 20 übertragbar sind.

Das in der Figur 1 dargestellte zweite Dämpfungsmittel 24 ist an einer bodenseitig an dem unteren Verbindungselement 16 angeordneten, im Wesentlichen ebenen, Montagefläche 26 angeordnet. Zur Abstützung des unteren Verbindungselementes 16 und/oder der Lagerstelle 12 gegenüber der Karosserie 18 ist eine Adapterplatte 28 vorgesehen. Die Adapterplatte 28 ist karosserieseitig befestigt und ist über Befestigungsmittel 30, beispielsweise in Form von Schrauben, mit dem unteren Verbindungselement 16 lösbar verbunden, wobei das zweite Dämpfungsmittel 24 zwischen dem unteren Verbindungselement 16 und der Adapterplatte 28 angeordnet ist. Das dargestellte zweite Dämpfungsmittel 24 ist mehrteilig ausgebildet und weist mehrere Dämpfungselemente 32 auf, welche jeweils einem Befestigungsmittel 30 zugeordnet sind. Hierdurch kann eine wirkungsvolle Dämpfung von Schwingungen und/oder Vibrationen erfolgen. Zur Befestigung an der Karosserie 18 des Fahrzeuges weist die Adapterplatte 28 innenseitig einen ersten Befestigungsbereich 42 und/oder bodenseitig einen zweiten Befestigungsbereich 44 auf.

Die Adapterplatte 28 in Figur 1 ist als Gußbauteil 34 ausgestaltet. Die Adapterplatte 28 ist dabei in Form einer ersten Adapterplatte 38 ausgestaltet, welche zur Montage an einer ersten Form 40 der Karosserie 18 ausgebildet ist. Die Adapterplatte 18 (Fig. 2) kann auch in Form eines Blechbauteils 36 ausgestaltet sein, wodurch eine kostengünstige Herstellung ermöglicht wird. Die in Figur 2 dargestellte Adapterplatte 18 ist zudem in Form einer zweiten Adapterplatte 46 ausgestaltet, welche zur Montage an einer zweiten Form 48 der Karosserie 18 ausgebildet ist. Die Anordnung der Befestigungsmittel 30 zur Befestigung des unteren Verbindungselementes 16, und insbesondere des zweiten Dämpfungsmittels 24, an der Adapterplatte 28, 38, 46 bleiben unverändert. Dies ermöglicht durch Auswahl der jeweiligen Adapterplatte 28 eine kostengünstige Anpassung der Lagerstellen 12 an die jeweilige Form 40, 48 einer Karosserie 18, beispielsweise bei unterschiedlichen Baureihen eines landwirtschaftlichen Fahrzeuges.

### Bezugszeichenliste

- 10: Dämpfungssystem
- 12: Lagerstelle
- 14: erstes Dämpfungsmittel
- 16: unteres Verbindungselement
- 18: Karosserie
- 20: oberes Verbindungselement
- 22: Kabine
- 24: zweites Dämpfungsmittel
- 26: Montagefläche
- 28: Adapterplatte
- 30: Befestigungsmittel
- 32: Dämpfungselement
- 34: Gußbauteil
- 36: Blechbauteil
- 38: erste Adapterplatte
- 40: erste Form
- 42: erster Befestigungsbereich
- 44: zweiter Befestigungsbereich
- 46: zweite Adapterplatte
- 48: zweite Form

## Patentansprüche

1. Dämpfungssystem für eine Lagerung einer Kabine (22), insbesondere eines landwirtschaftlichen Fahrzeuges, mit mindestens zwei Lagerstellen (12), wobei jede Lagerstelle (12) jeweils ein erstes Dämpfungsmittel (14) zur Dämpfung einer Vertikalbewegung aufweist, wobei jede Lagerstelle (12), insbesondere genau, ein unteres Verbindungselement (16) und ein oberes Verbindungselement (20) zur Verbindung mit einer Kabine (22) aufweist, wobei das untere und das obere Verbindungselement (16, 20) einer Lagerstelle (12) jeweils durch das erste Dämpfmittel (14) relativ zueinander beweglich miteinander verbunden sind, und dass zumindest ein Verbindungselement (16, 20) einer Lagerstelle (12) ein zweites Dämpfungsmittel (24) zur Dämpfung von Vibrationen aufweist, wobei das zweite Dämpfungsmittel (24) an einer bodenseitig an dem unteren Verbindungselement (16) angeordneten, im Wesentlichen ebenen, Montagefläche (26) angeordnet ist, wobei die Lagerstelle (12) eine Adapterplatte (28, 38, 46) zur Verbindung mit einer Karosserie (18) aufweist, wobei die Adapterplatte (28, 38, 46) bodenseitig an dem unteren Verbindungselement (16) durch Befestigungsmittel (30) angeordnet ist, **dadurch gekennzeichnet, dass** das zweite Dämpfungselement (24) zwischen dem unteren Verbindungselement (16) und der Adapterplatte (28, 38, 46) angeordnet ist, wobei das zweite Dämpfungsmittel (24) mehrteilig ausgebildet ist und mehrere Dämpfungselemente (32) aufweist, welche jeweils einem Befestigungsmittel (30) zugeordnet sind.

2. Dämpfungssystem nach Anspruch 1, **dadurch gekennzeichnet, dass** zweite Dämpfungsmittel (24) aus mehreren Dämpfungselementen (32) besteht.

3. Dämpfungssystem nach Anspruch 1 oder 2, **dadurch gekennzeichnet, dass** jedem Befestigungsmittel (30) jeweils ein Dämpfungselement (32) zugeordnet ist.

4. Dämpfungssystem nach einem der vorherigen Ansprüche, **dadurch gekennzeichnet, dass** die Adapterplatte (28, 38, 46) bodenseitig und/oder randseitig Befestigungsbereiche (42, 44) zur Verbindung mit der Karosserie (18) aufweist.

5. Dämpfungssystem nach einem der vorherigen Ansprüche, **dadurch gekennzeichnet, dass** die Adapterplatte (28, 38, 46) Befestigungsbereiche (42, 44) zur Befestigung an einer ersten und/oder zweiten Form (40, 48) der Karosserie (18) aufweist.

6. Dämpfungssystem nach einem der vorherigen Ansprüche, **dadurch gekennzeichnet, dass** jeweils eine erste Adapterplatte (38) und/oder eine zweite Adapterplatte (46) vorgesehen sind, zu Verbindung mit einer in einer ersten oder zweiten Form (40, 48) ausgestalteten Karosserie (18).

7. Dämpfungssystem nach einem der vorherigen Ansprüche, **dadurch gekennzeichnet, dass** die Adapterplatte (28, 38, 46) in Form eines Blechbauteils (36) und/oder eines Gussbauteils (34) ausgebildet ist.

8. Landwirtschaftliches Fahrzeug, insbesondere Traktor, umfassend eine an einer Karosserie (18) gelagerte Kabine (22), **dadurch gekennzeichnet, dass** zur Lagerung der Kabine (22) ein Dämpfungssystem (10) nach einem der Ansprüche 1 bis 7 vorgesehen ist.

## Claims

1. A damping system for a mounting for a cabin (22), in particular of an agricultural vehicle, having at least two bearings (12), wherein each bearing (12) has a respective first damping means (14) for damping a vertical movement, wherein each bearing (12) has in particular precisely one lower connecting element (16) and one upper connecting element (20) for connection to a cabin (22), wherein the lower and the upper connecting element (16, 20) of a bearing (12) are respectively connected together so as to be movable relative to each other by means of the first damping means (14), and in that at least one connecting element (16, 20) of a bearing (12) has a second damping means (24) for damping vibrations, wherein the second damping means (24) is disposed on a substantially flat mounting surface (26) disposed on the underside of the lower connecting element (16), wherein the bearing (12) has an adapter plate (28, 38, 46) for connection to a chassis (18), wherein the adapter plate (28, 38, 46) is disposed on the underside of the lower connecting element (16) by means of fastening means (30), **characterized in that** the second damping element (24) is disposed between the lower connecting element (16) and the adapter plate (28, 38, 46), wherein the second damping means (24) is constructed from multiple parts and has a plurality of damping elements (32), each of which is associated with a fastening means (30).

2. The damping system according to claim 1, **characterized in that** the second damping means (24) consists of a plurality of damping elements (32).

3. The damping system according to claim 1 or claim 2, **characterized in that** a respective damping element (32) is associated with each fastening means (30).

4. The damping system according to one of the preceding claims, **characterized in that** the underside and/or side of the adapter plate (28, 38, 46) has fastening regions (42, 44) for connection to the chassis (18).

5. The damping system according to one of the preceding claims, **characterized in that** the adapter plate (28, 38, 46) has fastening regions (42, 44) for fastening to a first and/or second type (40, 48) of the chassis (18).

6. The damping system according to one of the preceding claims, **characterized in that** a first adapter plate (38) and/or a second adapter plate (46) are respectively provided for connection to a chassis (18) with a first or a second type of design (40, 48).

7. The damping system according to one of the preceding claims, **characterized in that** the adapter plate (28, 38, 46) is in the form of a sheet metal component (36) and/or a cast component (34).

8. An agricultural vehicle, in particular a tractor, comprising a cabin (22) mounted on a chassis (18), **characterized in that** a damping system (10) according to one of claims 1 to 7 is provided in order to mount the cabin (22).

## Revendications

1. Système d'amortissement pour un moyen d'appui d'une cabine (22), en particulier d'un véhicule agricole, comprenant au moins deux points d'appui (12), chaque point d'appui (12) comportant respectivement un premier moyen d'amortissement (14) pour l'amortissement d'un déplacement vertical, chaque point d'appui (12) comportant en particulier exactement un élément de liaison inférieur (16) et un élément de liaison supérieur (20) pour la liaison avec une cabine (22), les éléments de liaison inférieur et supérieur (16, 20) d'un point d'appui (12) étant reliés entre eux de manière mobile l'un par rapport à l'autre par l'intermédiaire du premier moyen d'amortissement (14), et en ce qu'au moins un élément de liaison (16, 20) d'un point d'appui (12) comporte un second moyen d'amortissement (24) pour l'amortissement de vibrations, le second moyen d'amortissement (24) étant disposé sur une surface de montage (26) sensiblement plane, disposée côté sol sur l'élément de liaison inférieur (16), le point d'appui (12) comportant une plaque d'adaptation (28, 38, 46) pour la liaison avec une carrosserie (18), la plaque d'adaptation (28, 38, 46) étant disposée côté sol sur l'élément de liaison inférieur (16) par l'intermédiaire de moyens de fixation (30), **caractérisé en ce que** le second moyen d'amortissement (24) est disposé entre l'élément de liaison inférieur (16) et la plaque d'adaptation (28, 38, 46), le second moyen d'amortissement (24) étant conçu en plusieurs parties et comportant plusieurs éléments d'amortissement (32) qui sont associés respectivement à un moyen de fixation (30).

2. Système d'amortissement selon la revendication 1, **caractérisé en ce que** second moyen d'amortissement (24) est constitué de plusieurs éléments d'amortissement (32).

3. Système d'amortissement selon la revendication 1 ou 2, **caractérisé en ce qu'**à chaque moyen de fixation (30) est associé respectivement un élément d'amortissement (32).

4. Système d'amortissement selon une des revendications précédentes, **caractérisé en ce que** la plaque d'adaptation (28, 38, 46) comporte côté sol et/ou côté bord des zones de fixation (42, 44) pour la liaison avec la carrosserie (18).

5. Système d'amortissement selon une des revendications précédentes, **caractérisé en ce que** la plaque d'adaptation (28, 38, 46) comporte des zones de fixation (42, 44) pour la fixation à une première ou une seconde forme (40, 48) de la carrosserie (18).

6. Système d'amortissement selon une des revendications précédentes, **caractérisé en ce qu'**une première plaque d'adaptation (38) et/ou une seconde plaque d'adaptation (46) sont respectivement prévues pour une liaison avec une carrosserie (18) conformée en une première ou une seconde forme (40, 48).

7. Système d'amortissement selon une des revendications précédentes, **caractérisé en ce que** la plaque d'adaptation (28, 38, 46) est conçue sous la forme d'une pièce en tôle (36) et/ou d'une pièce en fonte (34).

8. Véhicule agricole, en particulier tracteur, incluant une cabine (22) prenant appui sur une carrosserie (18), **caractérisé en ce que**, pour l'appui de la cabine (22), est prévu un système d'amortissement (10) selon une des revendications 1 à 7.
